# EUROPEAN PATENT APPLICATION

(11) **EP 4 056 541 A1**
(43) Date of publication of application: **14.09.2022**
(21) Application number: 22156461.0
(22) Date of filing: 13.02.2022
(51) Int. Cl.: C05B 1/06, C05B 11/06, C05B 11/10, C05C 5/04, C05D 3/02, C05D 9/02

(54) **ODDA PROCESS FOR THE PRODUCTION OF NITROGEN-BASED FERTILIZERS WITH REDUCED SAND FORMATION**

(30) Priority: 13.03.2021 BE 202105189
(71) Applicant: EuroChem Antwerpen, 2040 Antwerpen (BE)
(72) Inventor: Verhelst, Pascal, 2040 Antwerpen (BE); Vancauwenberghe, Alex, 2040 Antwerpen (BE)
(74) Representative: Willnegger, Eva

(57) **Abstract**

The present invention is directed at an ODDA process with reduced sand formation in the off-gas piping for fertilizer production. In a preferred embodiment, the improved sand formation is obtained by the addition of water in the off-gas piping.

## Description

### BACKGROUND

The mineral fertilizers produced by our industry help to feed the fast growing world population. A sufficient and targeted supply of nutrients enables agricultural crops to grow and food to be produced. Approximately 50% of these nutrients come from mineral fertilizers.

Complex mineral fertilisers can be produced via various processes or production routes. An important production step is the conversion of the phosphor from the natural rock phosphate into a plant available form. One of the possible processes to do so is the so-called nitrophosphate route or ODDA process. The ODDA process uses all nutrient components to produce nitrate containing straight and complex fertilisers. Consequently, the ODDA process is an example of intrinsic circular economic principles.

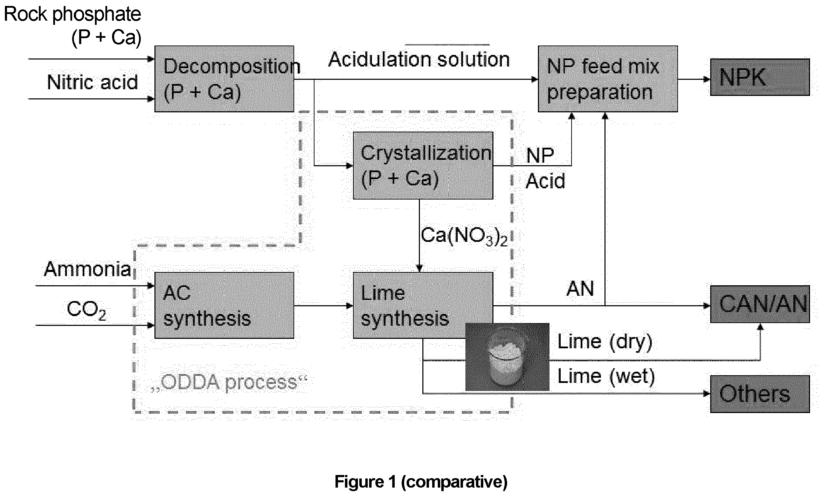

The ODDA process was invented by Erling Johnson in the municipality of Odda in Norway in 1928. Accordingly, the ODDA process has first been described in patent GB339340 to ODDA Smelteverk. The ODDA process is still applied today to produce high volumes of fertilizers in the order of several millions of tons per year. A process flow chart of the reaction of the ODDA process is shown in Figure 1.

The ODDA process comprises a first step of acidifying rock phosphate comprising fluorides and SiO2 with a nitric acid solution to produce an acidulation solution according to chemical equation 1:

Ca5(PO4)3OH + 10 HNO3 → 3 H3PO4 + 5 Ca(NO3)2 + H2O

Wherein the fluorides react according to chemical equation 1a:

   Ca5[(PO4)3(F)] + 10 HNO3 → 5 Ca(NO3)2 + 3 H3PO4 + HF
Wherein hydrofluoric acid obtained according to chemical equation 1a reacts with reactive SiO2 according to chemical equation 1b:

   4 HF + SiO2 ←→ SiF4 + 2 H2O
Wherein the SiF4 obtained according to chemical equation 1b further reacts with the hydrofluoric acid obtained according to chemical equation 1a to produce H2SiF6 according the chemical equation 1c):

   2 HF + SiF4 ←→ H2SiF6
Or directly according to the chemical reaction 1d:

   6 HF + SiO₂ → H₂SiF₆ + 2 H₂O

Insoluble residues may be removed by sedimentation and filtration. The mixture is then cooled, in general to below 0 °C. The calcium nitrate crystallizes according to chemical equation 2 and can be separated from the phosphoric acid by filtration.

Chemical equation 2: 2 H3PO4 + 3 Ca(NO3)2 + 12 H2O → 2 H3PO4 + 3 Ca(NO3)2·4H2O

The resulting calcium nitrate produces nitrogen fertilizer. The filtrate is composed mainly of phosphoric acid with some nitric acid and traces of calcium nitrate. The filtrate is then neutralized with ammonia to produce a compound fertilizer according to chemical equation 3:

Chemical equation 3: Ca(NO3)2 + 4 H3PO4 + 8 NH3 → CaHPO4 + 2 NH4NO3 + 3(NH4)2HPO4

If potassium chloride or potassium sulfate is added, the result will be NPK fertilizer.

The calcium nitrate can be used as calcium nitrate fertilizer. The calcium nitrate may also be converted into ammonium nitrate and calcium carbonate using carbon dioxide and ammonia according to chemical equation 4:

Chemical equation 4: Ca(NO3)2 + 2 NH3 + CO2 + H2O → 2 NH4NO3 + CaCO3

Rock phosphate contains fluorine and sand. Consequently, the decomposition of rock phosphate with nitric acid according to step a, leads to the formation of hydrofluoric acid according to chemical equation 1a above. Hydrofluoric acid obtained according to chemical equation 1a reacts with reactive SiO₂ to form SiF4 and water according to chemical equation 1b. The SiF4 obtained according to chemical equation 1b reacts with HF to H2SiF6 according to chemical equation 1c. The H2SiF6 obtained according to chemical equation 1c and 1d forms sand deposits in the off-gas piping. Without a tight control of this sand formation the entire off-gas piping is partially or finally entirely obstructed or clogged by sand. This clogging or obstruction risk is associated with process down time, material fatigue and damage, as well as safety hazards for the workers when cleaning the off-gas piping. It thus increases the ODDA maintenance costs substantially.

GB1037303 to St Paul Ammonia Products describes a nitro phosphoric process, in which silicon polyfluoride is removed by precipitation with an alkali metal compound in a precipitation vessel. The patent claims to remove the entire rock fluorine and thus avoids any clogging of the piping through sand.

CN1120518A to Ding Zhengyuan discloses a process for SiF4 removal in fertilizer production through an extrusion absorption tower. The pressurized circulating fluid is mixed with the fluorine-containing exhaust gas to force the gas-liquid contact to absorb the silicon tetrafluoride therein.

However, none of the above-mentioned documents describes an effective low-cost solution for the reduction or the elimination of the formation of sand in the off-gas piping of the ODDA process for high volume fertilizer production. In particular, none of the above-mentioned documents discloses a solution to the SiF4 removal without the need for a fluorine precipitation vessel or an absorption tower of SiF4 removal.

Accordingly, the objective of this invention is an integrated method for reduced sand formation. In particular, the objective of this invention is an improved method for controlling or avoiding the formation of sand in the off-gas pipe without the need for additional process steps or additional devices like a fluorine precipitation vessel or an absorption tower.

### SHORT DESCRIPTION OF THE INVENTION

The inventors now have surprisingly found that the addition of a water jet in the off-gas piping in proximity of the acidulation vessels (100) reduces, controls or eliminates essentially or entirely the formation of sand in the off-gas piping of the ODDA process for high volume fertilizer production.

Accordingly, a first aspect of the invention is an ODDA process for the production of nitrogen-based fertilizers comprising the steps of
a) Acidifying rock phosphate comprising fluorides and SiO₂ with a nitric acid solution to produce an acidulation solution according to chemical equation 1:

   Ca5(PO4)3OH + 10 HNO3 → 3 H3PO4 + 5 Ca(NO3)2 + H2O

   Wherein the fluorides react according to chemical equation 1a:

      Ca5[(PO4)3(F)] + 10 HNO3 → 5 Ca(NO3)2 + 3 H3PO4 + HF
   Wherein hydrofluoric acid obtained according to equation 1a reacts with reactive SiO₂ according to chemical equation 1b:

      4 HF + SiO₂ ←→ SiF4 + 2 H2O
   Wherein the SiF4 obtained according to chemical equation 1b further reacts with the hydrofluoric acid obtained according to chemical equation 1a to produce H2SiF6 according the chemical equation 1c:

      2 HF + SiF4 ←→ H2SiF6
   Or directly according to the chemical reaction 1d:

      6 HF + SiO₂ → H₂SiF₆ + 2 H₂O
b) Cooling the acidulation solution of step a) to temperature that allows for the crystallization of calcium nitrate according to chemical equation 2:

   2 H3PO4 + 3 Ca(NO3)2 + 12 H2O → 2 H3PO4 + 3 Ca(NO3)2·4H2O
c) Optionally neutralizing the reaction mixture of step b) with ammonia to produce a mixture of ammonium phosphate, calcium phosphate and ammonium nitrate according to chemical equation 3:

   Ca(NO3)2 + 4 H3PO4 + 8 NH3 → CaHPO4 + 2 NH4NO3 + 3(NH4)2HPO4
d) Converting the calcium nitrate obtained in step b) into ammonium nitrate and calcium carbonate using carbon dioxide and ammonia according to chemical equation 4:

   Ca(NO3)2 + 2 NH3 + CO2 + H2O → 2 NH4NO3 + CaCO3
e) Separating the calcium carbonate from the ammonium nitrate in a sedimentation vessel (100),
   wherein a water is added to the off-gas section (110) of the acidulation vessel (100) of step a) to prevent, control or reduce the formation of SiO2 in the off-gas piping according to chemical equation 1e:

   3 SiF4 + 2 H2O => 2 H2SiF6 + SiO2

   Or according to chemical equation 1f:

   SiF4 + 2 H2O => 4 HF + SiO2

In another embodiment, the addition of water leads to a substantially complete prevention of the sand formation in the off-gas piping. In a preferred embodiment, the sand formation in the off-gas piping of the acidulation vessel (100) is reduced by at least 90 w%, preferably by at least 95 w% and even more preferably by at least 99 w% as compared to a situation without the addition of a water according to the present invention.

In particularly preferred embodiment, the water does not comprise any other compounds. However, the water may also be a mixture, for example an aqueous solution. In this embodiment, the water may comprise other compounds.

In another embodiment, the water is added to reduce, control or eliminate the formation of sand in the off-gas piping (200).

In another embodiment, the water is added in the form of a spray or an aerosol generated by one or more nozzles (300).

In another embodiment, the one or more nozzles (300) are arranged in a region of the off-gas piping (110) that is abutting the acidulation vessel (100).

In another embodiment, the pressure of the water of is 0.1 bar or more, preferably, 1 bar or more, even more preferably 2 bar or more.

In another embodiment, the water pressure of the water of is 10 bar or less, preferably 7 bar or less, even more preferably 4 bar or less.

In another embodiment, the reaction products obtained according to any of the process steps a) to e) are further processed to straight N or an NP or an NPK fertilizer either in granular or in liquid from.

Another aspect of the present invention is the use of a water, to reduce the formation of sand in the off-gas piping of the ODDA process. In a preferred embodiment, the water is added to the off-gas section (110) of the acidulation vessel (100) of step a) to prevent the formation of SiO2 in the off-gas piping according to chemical equation 1e:

3 SiF4 + 2 H2O => 2 H2SiF6 + SiO2

Or chemical equation 1f:

SiF4 + 2 H2O => 4 HF + SiO2.

In another embodiment of the use of the present invention, the aqueous aerosol is used to reduce, control or eliminate the formation of sand in the off-gas piping of the acidulation vessel (100) the ODDA process.

In another embodiment of the use of the present invention, water is used as the aqueous aerosol. Preferably, the water is added in the form of water jets. Even more preferably, the water is produced through one or more nozzles (300). In a particularly preferred use, the one or more nozzles are arranged in a region of the off-gas piping (110) that is abutting the acidulation vessel (100).

### SHORT DESCRIPTION OF THE DRAWINGS

Figure 1 shows a flow chart of the ODDA process according to the state of the art.
Figure 2 shows a flow chart of the ODDA process according to the present invention.
Figure 3 shows a schematic embodiment of an exemplary embodiment of the acidulation vessel (100) with two water-jets (300) arranged in a region (210) of the off-gas piping (200) abutting the acidulation vessel (100).

### DETAILED DESCRIPTION OF THE DRAWINGS

Figure 1 shows a flow chart of the ODDA process for the production of nitrogen-based fertilizers according to the state of the art comprising ODDA process for the production of nitrogen-based fertilizers comprising the steps of
a) Acidifying rock phosphate comprising fluorides and SiO2 with a nitric acid solution to produce an acidulation solution according to chemical equation 1:

   Ca5(PO4)3OH + 10 HNO3 → 3 H3PO4 + 5 Ca(NO3)2 + H2O

   Wherein the fluorides react according to chemical equation 1a:

      Ca5[(PO4)3(F)] + 10 HNO3 → 5 Ca(NO3)2 + 3 H3PO4 + HF
   Wherein hydrofluoric acid obtained according to equation 1a reacts with SiO2 according to chemical equation 1b:

      4 HF + SiO2 ←→ SiF4 + 2 H2O
   Wherein the SiF4 obtained according to chemical equation 1b further reacts with the hydrofluoric acid obtained according to chemical equation 1a to produce H2SiF6 according the chemical equation 1c):

      2 HF + SiF4 ←→ H2SiF6
   Or directly according to the chemical reaction 1d:

      6 HF + SiO₂ → H₂SiF₆ + 2 H₂O
b) Cooling the acidulation solution of step a) to temperature that allows for the crystallization of calcium nitrate according to chemical equation 2:

   2 H3PO4 + 3 Ca(NO3)2 + 12 H2O → 2 H3PO4 + 3 Ca(NO3)2·4H2O
c) Optionally neutralizing the reaction mixture of step b) with ammonia to produce a mixture of ammonium phosphate, calcium phosphate and ammonium nitrate according to chemical equation 3:

   Ca(NO3)2 + 4 H3PO4 + 8 NH3 → CaHPO4 + 2 NH4NO3 + 3(NH4)2HPO4
d) Converting the calcium nitrate obtained in step b) into ammonium nitrate and calcium carbonate using carbon dioxide and ammonia according to chemical equation 4:

   Ca(NO3)2 + 2 NH3 + CO2 + H2O → 2 NH4NO3 + CaCO3
e) Separating the calcium carbonate from the ammonium nitrate in a sedimentation vessel (100).

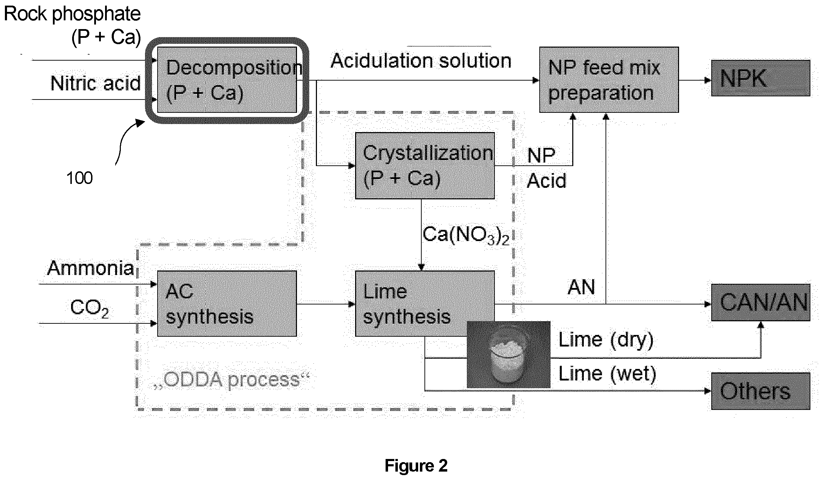

Figure 2 shows the process of the invention with reduced sand formation ODDA process for the production of nitrogen-based fertilizers comprising the steps of
a) Acidifying rock phosphate comprising fluorides and SiO2 with a nitric acid solution to produce an acidulation solution according to chemical equation 1:

   Ca5(PO4)3OH + 10 HNO3 → 3 H3PO4 + 5 Ca(NO3)2 + H2O

   Wherein the fluorides react according to chemical equation 1a:

      Ca5[(PO4)3(F)] + 10 HNO3 → 5 Ca(NO3)2 + 3 H3PO4 + HF
   Wherein hydrofluoric acid obtained according to equation 1a reacts with reactive SiO2 according to chemical equation 1b:

      4 HF + SiO2 ←→ SiF4 + 2 H2O
   Wherein the SiF4 obtained according to chemical equation 1b further reacts with the hydrofluoric acid obtained according to chemical equation 1a to produce H2SiF6 according the chemical equation 1c:

      2 HF + SiF4 ←→ H2SiF6
   Or directly according to the chemical reaction 1d:

      6 HF + SiO₂ → H₂SiF₆ + 2 H₂O
b) Cooling the acidulation solution of step a) to temperature that allows for the crystallization of calcium nitrate according to chemical equation 2:

   2 H3PO4 + 3 Ca(NO3)2 + 12 H2O → 2 H3PO4 + 3 Ca(NO3)2·4H2O
c) Optionally neutralizing the reaction mixture of step b) with ammonia to produce a mixture of ammonium phosphate, calcium phosphate and ammonium nitrate according to chemical equation 3:

   Ca(NO3)2 + 4 H3PO4 + 8 NH3 → CaHPO4 + 2 NH4NO3 + 3(NH4)2HPO4
d) Converting the calcium nitrate obtained in step b) into ammonium nitrate and calcium carbonate using carbon dioxide and ammonia according to chemical equation 4:

   Ca(NO3)2 + 2 NH3 + CO2 + H2O → 2 NH4NO3 + CaCO3
e) Separating the calcium carbonate from the ammonium nitrate in a sedimentation vessel (100),
   wherein a water is added to the off-gas section (110) of the acidulation vessel (100) of step a) to prevent the formation of SiO2 in the off-gas piping according to chemical equation 1e:

      3 SiF4 + 2 H2O => 2 H2SiF6 + SiO2
   Or chemical equation 1f:

      SiF4 + 2 H2O => 4 HF + SiO2

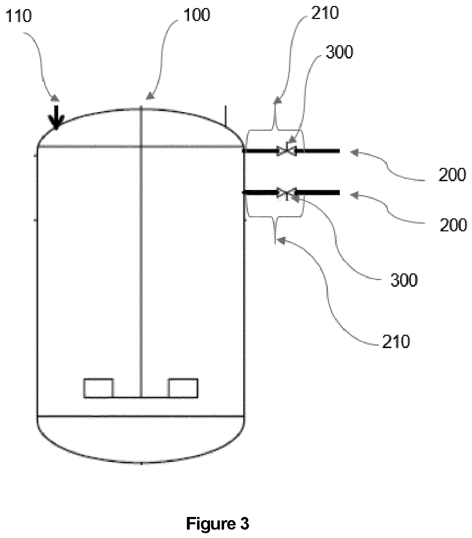

Figure 3 shows a preferred embodiment of an acidulation vessel (100) and an off-gas piping (200), wherein the water (300) is added in a section of the off-as piping abutting the acidulation vessel (210). The arrangement of the present invention is an integrated method for reduced sand formation. In particular, sand formation in the off-gas piping of the acidulation vessel (100) is controlled, reduced or completely avoided through the simple yet effective installation of water jets. In a preferred embodiment, no extra devices like a fluorine precipitation vessel or an absorption tower are needed for the SiF4 removal to avoid the formation of sand.

## Claims

1. ODDA process for the production of nitrogen-based fertilizers comprising the steps of
a) Acidifying rock phosphate comprising fluorides and SiO2 with a nitric acid solution to produce an acidulation solution according to chemical equation 1:
Ca5(PO4)3OH + 10 HNO3 → 3 H3PO4 + 5 Ca(NO3)2 + H2O
Wherein the fluorides react according to chemical equation 1a:
Ca5[(PO4)3(F)] + 10 HNO3 → 5 Ca(NO3)2 + 3 H3PO4 + HF
Wherein hydrofluoric acid obtained according to equation 1a reacts with reactive SiO2 according to chemical equation 1b:
4 HF + SiO2 ←→ SiF4 + 2 H2O
Wherein the SiF4 obtained according to chemical equation 1b further reacts with the hydrofluoric acid obtained according to chemical equation 1a to produce H2SiF6 according the chemical equation 1c:
2 HF + SiF4 ←→ H2SiF6
Or directly according to the chemical reaction 1d:
6 HF + SiO₂ → H₂SiF₆ + 2 H₂O
b) Cooling the acidulation solution of step a) to temperature that allows for the crystallization of calcium nitrate according to chemical equation 2:
2 H3PO4 + 3 Ca(NO3)2 + 12 H2O → 2 H3PO4 + 3 Ca(NO3)2·4H2O
c) Optionally neutralizing the reaction mixture of step b) with ammonia to produce a mixture of ammonium phosphate, calcium phosphate and ammonium nitrate according to chemical equation 3:
Ca(NO3)2 + 4 H3PO4 + 8 NH3 → CaHPO4 + 2 NH4NO3 + 3(NH4)2HPO4
d) Converting the calcium nitrate obtained in step b) into ammonium nitrate and calcium carbonate using carbon dioxide and ammonia according to chemical equation 4:
Ca(NO3)2 + 2 NH3 + CO2 + H2O → 2 NH4NO3 + CaCO3
e) Separating the calcium carbonate from the ammonium nitrate in a sedimentation vessel (100),
wherein water is added to the off-gas section (110) of the acidulation vessel (100) of step a) to prevent the formation of SiO2 in the off-gas piping according to chemical equation 1e:
3 SiF4 + 2 H2O => 2 H2SiF6 + SiO2
Or chemical equation 1f:
SiF4 + 2 H2O => 4 HF + SiO2.

2. Process according to any of the preceding claims, wherein the water is added to reduce or eliminate the formation of sand in the off-gas piping (200).

3. Process according to any of the preceding claims, wherein the water is added in the form of a spray or an aerosol generated by one or more nozzles (300).

4. Process according to any of the preceding claims, wherein the one or more nozzles (300) are arranged in a region of the off-gas piping (110) that is abutting the acidulation vessel (100).

5. Process according to any of the preceding claims, wherein the ammonia nitrate obtained according to any of the process steps is further processed to straight N or an NP or an NPK fertilizer.

6. Use of water to reduce, control or eliminate the formation of sand in the off-gas piping of the acidulation vessel (100) the ODDA process.

7. Use according to claim 6, wherein water is added in the form of water jets.

8. Use according to claim 6, wherein the water is added through one or more nozzles (300) that create an aerosol or a spray.

9. Use according to claim 6, wherein the one or more nozzles are arranged in a region of the off-gas piping (110) that is abutting the acidulation vessel (100).
